# EUROPÄISCHE PATENTSCHRIFT

(11) **EP 2 808 151 B1**
(45) Veröffentlichungstag und Bekanntmachung des Hinweises auf die Patenterteilung: **28.10.2015**
(21) Anmeldenummer: 13169391.3
(22) Anmeldetag: 27.05.2013
(51) Int. Cl.: B29C 45/33, B29C 33/44, B29C 45/44, B29L 31/00

(54) **Entformungsmechanismus eines Spritzgusswerkzeugs**
Demolding mechanism of an injection molding tool
Mécanisme de déformation d'un outil de moulage par injection

(43) Veröffentlichungstag der Anmeldung: 03.12.2014
(73) Patentinhaber: Schoeller Allibert GmbH, 19057 Schwerin (DE)
(72) Erfinder: Bruckbauer, Peter, 83115 Neubeuern (DE)
(74) Vertreter: Winter, Brandl, Fürniss, Hübner, Röss, Kaiser, Polte - Partnerschaft mbB

(56) Entgegenhaltungen:
- EP-A2- 2 098 352
- JP-U- H0 273 309
- US-A- 4 570 897

## Beschreibung

Die vorliegende Erfindung betrifft einen Entformungsmechanismus zum Entformen eines Spritzgussteils mit Hinterschneidungen aus einem Spritzgusswerkzeug gemäß dem Oberbegriff des Anspruchs 1 sowie ein Spritzgießwerkzeug mit einem solchen Entformungsmechanismus.

Das automatische Spritzgießen ist heutzutage das am meisten eingesetzte Herstellungsverfahren für Kunststoffteile und die hierfür verwendeten Spritzgießwerkzeuge gehören zu den höchstbelasteten Geräten in der Technik. Die mechanische Auslegung ist für die spätere sichere Funktion des Werkzeugs maßgeblich. Es müssen dabei insbesondere die hohen Drücke, Gewichte und hochdynamischen Bewegungsabläufe berücksichtigt werden. Gerade bei der automatisierten Herstellung haben Faktoren wie Zykluszeiten, Wartungs- und Reparaturaufwand und ein damit ggf. verbundener Produktionsausfall einen wesentlichen Anteil an den Herstellungskosten.

Ein Spritzgießwerkzeug besteht aus mehreren Baugruppen (Schließeinheit, Spritzeinheit, Maschinenbett mit Hydraulik, Schaltschrank und Steuereinheit) mit jeweils einer Vielzahl an Einzelteilen. Gerade wenn das herzustellende Spritzgussteil, wie zum Beispiel ein Flaschenkasten oder andere Transportbehälter, an der Innenseite Hinterschneidungen aufweisen, werden die Werkzeuge und deren Ansteuerung sehr komplex. Nach dem Einspritzen der Formmasse in die zwischen den Werkzeugformhälften gebildete Kavität muss das Spritzteil nach einer Prozessbedingten Kühlzeit aus dem Werkzeug entfernt werden. Das Spritzteil kann mit unterschiedlichen Methoden entfernt werden, wobei hier auf ein typisches Entformungssystem mit Aufwerferrahmen verwiesen werden kann, welches das Spritzteil beim oder nach dem Öffnen der beweglichen Formhälfte von oder aus dieser auswirft.

Zur Entformung von Hinterschneidungen an Innenseiten des Spritzgussteils müssen zusätzlich entsprechende Schieber, Backen oder Kerne verwendet werden. Um beispielsweise bei einem Flaschenkasten einen Lamellengriff auszubilden, bei dem der Flaschenkasten im oberen Innenbereich geometrische Hinterschnitte aufweist, sind bewegliche Kernsegmente bzw. innen liegende Schieber oder Schieberpakte vorgesehen, die bei Betätigung der Auswerferplatte oder des Auswerferrahmens entlang einer schiefen Ebene schräg nach innen bewegt werden und dadurch die Hinterschneidung freigeben, so dass der Flaschenkasten entnommen werden kann. Um die Zykluszeit einerseits und auch die Steuerung von dem Auswerferrahmen und den Schiebern zu vereinfachen, ist man dazu übergegangen, das Entformen des Spritzgussteils und das Öffnen der Werkzeugformhälfte parallel zu fahren und Auswerferrahmen und Schieber im Wesentlichen gleichzeitig zu betätigen.

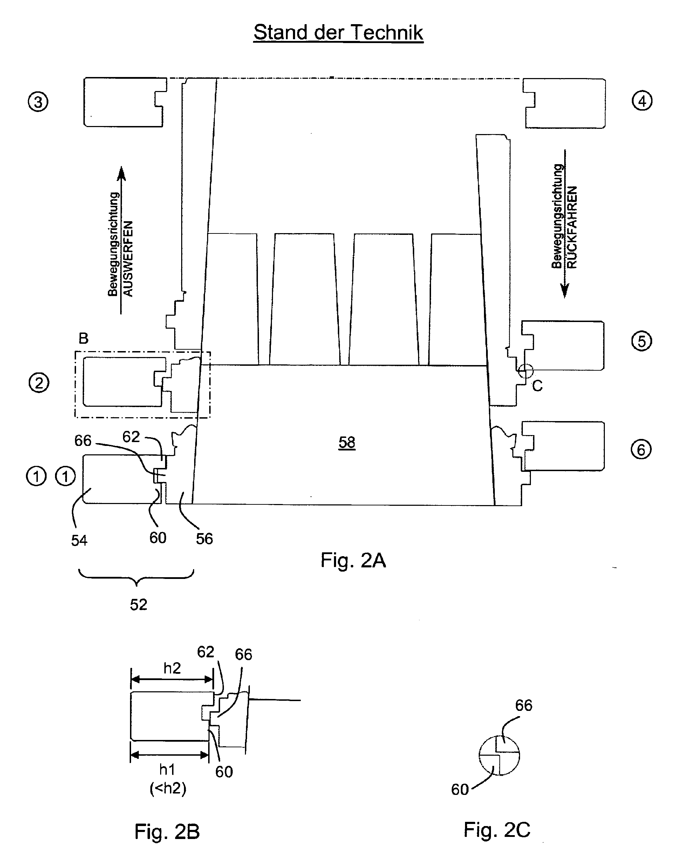

Die Fign. 2A bis 2C zeigen einen Entformungsmechanismus - ohne Spritzgußteil - nach dem Stand der Technik, der im Folgenden detailliert beschrieben wird.

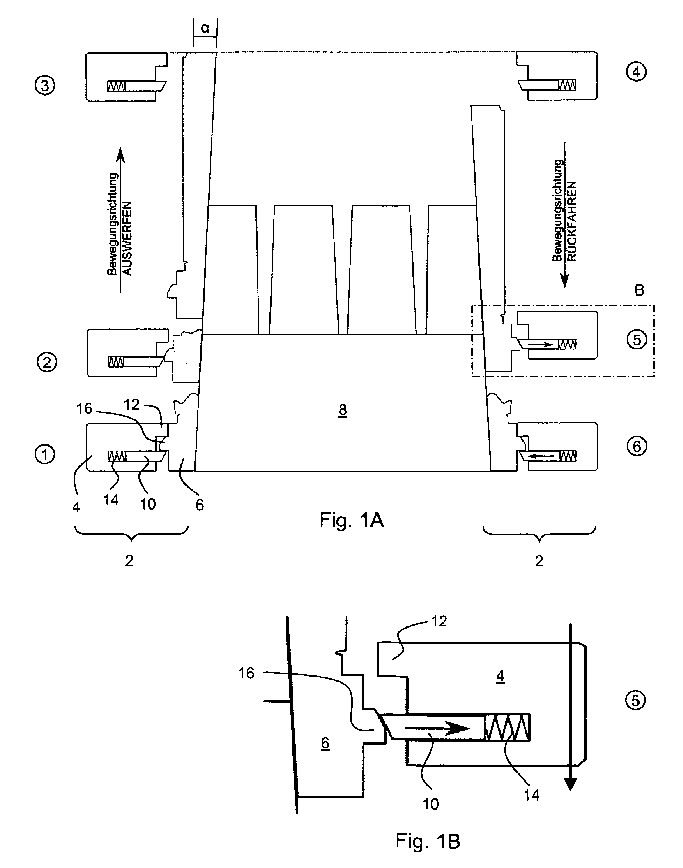

In der Fig. 2A ist prinzipiell ein Teil einer beweglichen Formhälfte gezeigt, die einen festen Werkzeugkern 58 und dazu seitlich angeordnete und in Auswerfrichtung schräg nach innen bewegliche Kernsegmente bzw. Schieber 56 aufweist, die über einen in Auswerfrichtung bewegbaren Auswerferrahmen 54 ansteuerbar bzw. betätigbar sind. In der Fig. 1 sind zum einen auf der linken Seite drei Positionen 1 bis 3 während der Auswerfbewegung dargestellt und auf der rechten Seite drei Positionen 4 bis 6 während der Rückfahrbewegung von Auswerferrahmen und Schieber in die Spritzstellung dargestellt. Da die vorliegende Erfindung die mechanische Kopplung bzw. Verzahnung von Schieber und Auswerferrahmen betrifft, ist in den in der Fig. 2A gezeigten Positionen auch nur der Kopplungsabschnitt des Schiebers 56 dargestellt.

Nach dem Öffnen der beiden Formhälften bewegt sich der Auswerferrahmen 54 entgegen der Öffnungsrichtung und schiebt das nicht gezeigte Spritzgussteil entlang der Kerntiefe in Auswerfrichtung. Die innen liegenden Schieber 56 bzw. Schieberpakte sind mit einer hervorstehenden Nase oder Rippe 66 zwischen zwei Mitnehmerstegen 60 und 62 gefangen und werden somit zusammen mit dem Auswerferrahmen 54 aus der Spritzstellung (Position 1) in Auswerfrichtung mitbewegt. Die Nase 66 und die Mitnehmer 60 und 62 sind fest oder einstückig mit ihren jeweiligen Baugruppen verbunden. Die Schieber 56 sind wie oben bereits erwähnt mit dem Kern 58 derart zusammengebaut, dass sie auf einer schrägen Gleitfläche sich nach innen bewegen können. Durch die Bewegung des Auswerferrahmens 54 werden die Schieber 56 auf der Gleitfläche schräg nach innen bewegt. Durch diesen Mechanismus 52 wird die Bewegung in Auswerfrichtung in eine Richtungskomponente quer zur Auswerferrichtung umgewandelt. Dabei bewegt sich die Nase 66 des Schiebers 56 senkrecht zur Bewegungsrichtung des Auswerferrahmens 54 bzw. Auswerfrichtung aus den Mitnehmern 60 und 62 heraus. Ab diesem Zeitpunkt (Position 2) ist der Schieber 56 frei und kann sich frei auf der schrägen Ebene bewegen. Der sich weiter in Auswerfrichtung bewegende Auswerferrahmen 54 streift das Spritzgussteil von dem Kern 58 ab. Unter Umständen werden die Schieber 56 nicht unmittelbar, sondern mittelbar über das Spritzgussteil noch so weit in Auswerfrichtung bewegt, bis sie so weit nach innen gewandert sind, dass sie die inneren Hinterschneidungen freigeben. Der Auswerferrahmen 54 bewegt sich so weit in Auswerfrichtung, bis das Spritzgussteil vom Kern 58 fällt oder mittels Handlinggeräten entnommen werden kann.

Nach dem Entformen und Auswerfen des Spritzgussteils (Position 3 bzw. 4) fährt der Auswerferrahmen 54 wieder zurück, bis die Mitnehmer 60 und 62 und die Nase 66 wieder ineinander greifen (Position 5). Bei richtiger Funktion wird der Mitnehmersteg 60, der etwas zurückgesetzt ist, oberhalb der Rippe 66 vorbeilaufen, und der Mitnehmersteg 62 mit seinem Vorsprung schlägt an die Rippe 66 an, und schiebt den Rahmen in die Ausgansstellung zurück. Dabei hat sich wieder der Formschluss aus 60, 62, und 66 ergeben, sodass man wieder zur Position 1 in die Ausgangslage / Spritzgießvorgang kommt.

Die Position 5 zeigt eine Situation einer sich anbahnenden bzw. möglichen Kollision, wenn die Bewegungsabstimmung aufgrund von Verschleiß, Wartungsfehlern, Abnutzung, etc. nicht optimal gegeben ist. Dabei trifft der Mitnehmersteg 60 auf die Rippe 66 des zu weit zurückgesetzten Schiebers, wodurch dieser dann bereits in die Ausgangsstellung mitgeschoben wird. Die Position 6 zeigt den Zustand der Kollision, da der Rahmen nicht in die Endstellung 1 zurückgeschoben werden kann.

Aus der Fig. 2B ist erkennbar, dass die Mitnehmerstege 60 und 62 für die mechanische Kopplung von Auswerferrahmen 54 und Schieber 56 unterschiedlich hoch sind bzw. unterschiedlich weit in seitlicher Richtung bzw. nach innen vorragen, wobei der in Auswerfrichtung weiter hinten angeordnete Mitnehmer 60 niedriger als der in Auswerfrichtung weiter vorne angeordnete Mitnehmer 62 ist, damit sich diese in Auswerfrichtung und Rückfahrrichtung jeweils in der richtigen Reihenfolge mit der Nase 66 des Schiebers 56 verzahnen können. Genauer gesagt wird der Schieber 56 über den Mitnehmer 60 in Auswerfrichtung bewegt und über den Mitnehmer 62 wieder zurück in die Spritzstellung gebracht.

Da der Schrägwinkel α, um welchen sich der Schieber schräg zur Auswerfrichtung nach innen bewegt, oftmals sehr klein ist bzw. klein gehalten werden muss, erfordert das Zusammenspiel zwischen den Mitnehmern 60 und 62 und der Nase 66 eine sehr präzise Fertigung und Auslegung der Bauteile, insbesondere beim Zusammenfahren der Formhälften. So hat sich gezeigt, dass diese exakte Abstimmung und Wirkungsweise der Eingriffspaarungen aufgrund von Verschleiß, Abnutzung und Verzug der Kontaktflächen und anderen Einflussgrößen mit der Zeit beschädigt werden, was sich nicht nur auf den Prozessablauf auswirkt, sondern bis hin zur Werkzeugkollisionen führen kann. Dabei kommt es häufig vor, dass sich die Schieber 56 aufgrund des Eigengewichts oder der Einbausituation, wie auf der rechten Bildhälfte der Fig. 1 gezeigt, von der Auswerflage (Position 3) selbständig etwas zurück in die Spritzstellung bewegen. Dabei kann es dazu kommen, dass, wie in der Fig. 2A (Position 5) und vergrößert in Fig. 2C gezeigt, bei der Rückfahrbewegung des Auswerferrahmens 54 der Schieber 56 nicht durch den Mitnehmer 62, sondern aufgrund der nun weiter außen befindlichen Nase 66 bereits durch den Mitnehmer 60 zurückbewegt wird und somit der Auswerferrahmen 54 nicht vollständig in die Spritzstellung zurückgebracht werden kann, da er durch den Schieber 56 blockiert wird. Wenn anschließend automatisch die Formhälften geschlossen werden, kommt es zu einer Werkzeugkollision.

Wenn andererseits der vom Auswerferrahmen freigegebene Schieber sich eigenständig weiter als gewünscht entlang der Gleitfläche in Auswerfrichtung bewegt, kann es sein, dass die Nase 66 des Schiebers 56 so weit nach innen gewandert ist, dass sich der Mitnehmer 62 des Auswerferrahmens 54 bei der Rückwärtsbewegung zu weit außen befindet und die Nase 6 nicht greifen kann und der Auswerferrahmen 54 alleine, d.h. ohne Schieber 56, in die Spritzstellung zurückbewegt wird. Auch hier kommt es beim anschließenden Schließen der Formhälften zu einer Werkzeugkollision, wodurch Auswerferrahmen 54 oder Schieber 56, insbesondere deren Verzahnung zerstört wird. Für die Fertigung bedeutet dies einen hohen Wartungsaufwand, höhere Zykluszeiten, einen Produktionsausfall und hohe Kosten für Reparaturen.

Vor diesem Hintergrund besteht die Aufgabe der vorliegenden Erfindung darin, einen Entformungsmechanismus zum Entformen eines Spritzgussteils mit Hinterschneidungen aus einem Spritzgusswerkzeug bereitzustellen, das einen nahezu verschleißfreien Bewegungsablauf sicherstellt, der bei niedrigen Zykluszeiten und hohen Stückzahlen gefahren werden kann.

Diese Aufgabe wird durch die Merkmale des Anspruchs 1 gelöst. Vorteilhafte Weiterbildungen sind Gegenstand der Unteransprüche. Der neben geordnete Anspruch 11 ist auf ein Spritzgießwerkzeug mit einem erfindungsgemäßen Entformungsmechanismus gerichtet.

Der erfindungsgemäße Entformungsmechanismus sieht einen Auswerfer oder ein Auswerferpaket, z. B. in Form eines Auswerferrahmens oder einer Abstreifplatte, vor, mit welchem das Spritzgussteil von einer Werkzeugformhälfte in eine Auswerfrichtung ausgeworfen werden kann, und ferner zumindest einen schräg zur Auswerfrichtung beweglichen und geführten Schieber zum Freigeben von Hinterschneidungen im Spritzgussteil. Der Auswerferrahmen und der zumindest eine Schieber weisen eine erste Mitnehmerpaarung auf, über welche der Auswerferrahmen den Schieber von einer Einspritzposition so weit schräg zur Auswerfrichtung bewegen kann, bis die erste Mitnehmerpaarung aufgrund des zunehmenden Abstands zwischen Auswerfer und Schieber außer Eingriff kommt. Erfindungsgemäß ist die erste Mitnehmerpaarung derart ausgebildet, dass sie bei einer Bewegung des Auswerferrahmens in die Auswerfrichtung einen Formschluss zwischen Auswerferrahmen und Schieber bewirkt, jedoch nicht bei einer Bewegung des Auswerferrahmens in die entgegengesetzte Rückfahrrichtung.

Durch diese Ausgestaltung der Mitnehmerpaarung wird erreicht, dass eine mechanische Kopplung zwischen Auswerferrahmen und Schieber nur in Auswerfrichtung zustande kommt und nicht in die entgegengesetzte Richtung. Die erste Mitnehmerpaarung ermöglicht somit nicht nur, dass der Schieber mittelbar über den Auswerferrahmen in Auswerfrichtung bewegt wird, um die Hinterschneidung freizugeben, sondern stellt gleichzeitig sicher, dass diese nicht versehentlich in Eingriff kommen, wenn der Auswerferrahmen zurückbewegt wird, was zu den oben geschilderten Problemen führen könnte. Mit anderen Worten wird die Funktion der ersten Mitnehmerpaarung auf die Auswerfbewegung beschränkt und somit eine Mitnahme des Schiebers durch den Auswerferrahmennur oder ausschließlich in Auswerfrichtung bewirkt. Dies schließt nicht jeglichen Formschluss zwischen Auswerferrahmen und Schieber in Rückfahrrichtung aus, sondern nur einen Formschluss über die erste Mitnehmerpaarung. Dadurch werden jeglicher Kollisionen oder Verklemmungen der ersten Mitnehmerpaarung bei der Rückführbewegung von Auswerferrahmen vermieden, wodurch Abrieb oder Verschleiß bei der ersten Mitnehmerpaarung bzw. von ineinandergreifenden Mitnehmerstegen und Vorsprüngen vermieden werden kann.

Die Mitnahme des Schiebers durch den Auswerfer in die Rückfahrrichtung zurück in die Einspritzposition kann über eine zweite Mitnehmerpaarung erfolgen. Auch wenn durch den erfindungsgemäßen Entformungsmechanismus ein Formschluss zwischen der ersten Mitnehmerpaarung unterbunden wird, so kann dennoch sichergestellt werden, dass die Rücknahme des Schiebers in die Einspritzposition (nur) über eine zweite Mitnehmerpaarung erfolgt.

Die erste Mitnehmerpaarung kann einen am Auswerferrahmen angeordneten ersten Mitnehmer, z. B. einen ersten Mitnehmersteg oder Vorsprung, und einem am Schieber ausgebildeten Eingriffsabschnitt, z. B. einen Vorsprung oder Absatz, aufweisen. Die zweite Mitnehmerpaarung kann durch einen am Auswerferrahmen in Auswerfrichtung weiter vorne angeordneten zweiten Mitnehmer und durch den am Schieber ausgebildeten Eingriffsabschnitt gebildet werden. Dabei sind der erste Mitnehmer und der Eingriffsabschnitt, d.h. die erste Mitnehmerpaarung, so ausgebildet, dass sie in Auswerfrichtung formschlüssig ineinander greifen und in Rückfahrrichtung einander ausweichen können.

Dadurch, dass der erste Mitnehmer und der Eingriffsabschnitt so ausgebildet sind, dass sie in Rückfahrrichtung einander ausweichen können, wird nicht nur ein Formschluss zwischen beiden Elementen bei einer Rückwärtsbewegung verhindert, sondern gleichzeitig ermöglicht, dass der erste Mitnehmer und der zweite Mitnehmer nicht mehr so genau aufeinander abgestimmt werden müssen, wie dies bei starren oder festen Mitnehmern der Fall ist. Da der erste Mitnehmer bzw. der Eingriffsabschnitt ausweichen können, können die beiden Mitnehmer beispielsweise gleich hoch ausgebildet werden und dennoch die richtige Verzahnung in Rückfahrrichtung erzielt werden.

Um den Formschluss zwischen der ersten Mitnehmerpaarung bzw. dem ersten Mitnehmer und dem Eingriffsabschnitt nur in Auswerfrichtung zu bewirken und nicht in die entgegengesetzte Richtung, kann beispielsweise der erste Mitnehmer so ausgebildet sein, dass er bei einer in Auswerfrichtung oder in Querrichtung einwirkenden Kraftkomponente zurück- oder ausweicht. Mit anderen Worten kann der erste Mitnehme so ausgebildet sein, dass er zurück- oder ausweichen kann, wenn der Auswerfer in Rückfahrrichtung bewegt wird und dabei der erste Mitnehmer auf Widerstand stößt, z. B. an einem Eingriffsabschnitt des Schiebers. Dadurch wird sichergestellt, dass in dem Fall, in dem sich der Schieber wie oben beschrieben selbständig in Richtung Einspritzposition zurückbewegt und deshalb der erste Mitnehmer auf den Eingriffsabschnitt des Schiebers stößt, selbständig zurück- oder ausweicht und erst der dafür vorgesehene zweite Mitnehmer mit dem Eingriffsabschnitt des Schiebers in Eingriff kommt.

Gemäß einem Aspekt der Erfindung kann der erste Mitnehmer quer zur Auswerfrichtung oder Rückfahrrichtung bewegbar gelagert sein und auf der der Rückfahrrichtung zugewandten Seite abgeschrägt oder abgerundet sein. Alternativ oder zusätzlich kann der am Schieber ausgebildete Vorsprung oder Absatz quer zur Auswerfrichtung oder Rückfahrrichtung beweglich gelagert sein und auf der der Auswerfrichtung zugewandten Seite abgeschrägt oder abgerundet sein. Dadurch wird bewirkt, dass für den Fall, dass der erste Mitnehmer bei seiner Rückwärtsbewegung auf den Vorsprung am Schieber trifft, dieser aufgrund der abgeschrägten Kante und der Beweglichkeit in Querrichtung zur Seite verdrängt wird bzw. den Vorsprung zur Seite drängt.

Durch diese konkrete Maßnahme wird sichergestellt, dass der erste Mitnehmer und der Eingriffsabschnitt einander ausweichen anstatt einen Formschluss einzugehen.

Gemäß einem anderen Aspekt der Erfindung kann der erste Mitnehmer so ausgebildet sein, dass er am Auswerferrahmen so gelagert ist, dass er nur in Auswerfrichtung auslenkbar ist und somit auf den am Schieber ausgebildeten Vorsprung nur in Auswerfrichtung eine Kraft aufbringen kann, während er in die entgegengesetzte Richtung durch den Vorsprung ausgelenkt wird.

Gemäß einem Aspekt der Erfindung ist der erste Mitnehmer federelastisch vorgespannt, so dass er nach einer Bewegung zur Seite oder einer Auslenkung über die Feder automatisch zurückgestellt wird, um anschließend wieder in der Position zu sein, in welcher er einen Formschluss mit dem Schieber eingehen kann, wenn der Auswerfer in Auswerfrichtung bewegt wird.

Gemäß einem Aspekt der Erfindung ist der erste Mitnehmer in Form einer Sperrklinke ausgebildet, wobei der erste Mitnehmer und der am Schieber angeordnete Vorsprung in Auswerfrichtung formschlüssig ineinander greifen und der erste Mitnehmer in Rückfahrrichtung durch den Vorsprung zur Seite verdrängt wird.

Gemäß einem Aspekt der Erfindung ist der Entformungsmechanismus speziell für innere Hinterschneidungen vorgesehen, wobei der Auswerfer einen Auswerferrahmen zum Abstreifen des Spritzgussteils vom Werkzeugkern ist und der zumindest eine Schieber ein innenliegender und ein in Auswerfrichtung schräg nach innen beweglicher Schieber oder Schieberpaket zum Freigeben von inneren Hinterschneidungen im Spritzgussteil. Der erfindungsgemäße Entformungsmechanismus hat sich insbesondere bei inneren Hinterschneidungen als vorteilhaft gezeigt.

Die oben genannte Aufgabe wird hinsichtlich des Spritzgießwerkzeugs durch die Merkmale des Anspruchs 11 gelöst. Ein erfindungsgemäßes Spritzgießwerkzeug weist eine feste und eine bewegliche Formhälfte auf, wobei der Werkzeugkern auf der beweglichen Formhälfte angeordnet ist. Erfindungsgemäß weist dieses Spritzgusswerkzeug einen Entformungsmechanismus auf, wie er oben beschrieben wurde. Ferner wird der Auswerferrahmen und damit mittelbar der Schieber beim Öffnen und/oder Schließen der beweglichen Formhälfte im Wesentlichen zur gleichen Zeit relativ in jeweils entgegengesetzte Richtungen bewegt. Ein solches erfindungsgemäßes Spritzgießwerkzeug erzielt nicht nur kürzere Zykluszeiten, da das Betätigen von Auswerferrahmen und Schieber und das Öffnen bzw. Schließen der Werkzeuge parallel gefahren werden können, sondern weist einen deutlich reduzierten Wartungsaufwand und somit eine höhere Verfügbarkeit des Werkzeugs auf. Aufgrund des erfindungsgemäßen Entformungsmechanismus werden ferner ein Verschleiß bei den Mitnehmerpaarungen und etwaige Werkzeugkollisionen und -schäden, wie durch das Schließen der Werkzeuge bei ausgefahrenen Schiebern, vermieden.

Weitere vorteilhafte Ausgestaltungen werden aus der Beschreibung der detaillierten Beschreibung ersichtlich.
Fig. 1A zeigt einen Entformungsmechanismus gemäß einer vorteilhaften Ausführungsform der Erfindung;
Fig. 1B zeigt eine vergrößerte Teilansicht des Ausschnitts B in der Fig.1;
Fig. 2A zeigt einen Entformungsmechanismus gemäß dem Stand der Technik;
Fig. 2B zeigt eine vergrößerte Teilansicht des Ausschnitts B in der Fig. 2A; und
Fig. 2C zeigt eine vergrößerte Teilansicht des Ausschnitts C in der Fig. 2A;

Die Fig. 1 (Figuren 1A und 1B) zeigt eine erste Ausführungsform der vorliegenden Erfindung. Genauer gesagt zeigt die Fig. 1 eine Prinzipskizze, in welcher verschiedene Positionen eines erfindungsgemäßen Entformungsmechanismus 2 beim Auswerfen eines (nicht gezeigten) Spritzgussteils und beim Zurückbringen des Entformungsmechanismus 2 in die Spritzstellung.

Der Entformungsmechanismus 2 ist auf der Seite der schließseitigen bzw. beweglichen Formhälfte angeordnet. Die düsenseitige bzw. feste Formhälfte ist in der Abbildung nicht dargestellt. Der Entformungsmechanismus 2 weist einen in Entformungsrichtung / Öffnungsrichtung (Auswerfrichtung) beweglichen Auswerferrahmen 4 und einen über diesen lose verbundene bzw. antriebsmäßig koppelbare Schieber 6 bzw. Schieberpakete 6 auf. Bei dem Schieber 6 handelt es sich um bewegliche Kernsegmente, die am Werkzeugkern 8 um einen Schrägwinkel α nach innen geführt sind. Der Schieber 6 weist an seiner Außenseite (nicht gezeigt) Formprofile auf, welche, wenn sich der Auswerferrahmen 4 und der Schieber 6 in der Spritzstellung (Position 1) befindet, umspritzt werden und die oben genannten inneren Hinterschneidungen im Spritzteil ausbilden. Über den Schrägwinkel α können die Schieber 6 beim Auswerfen schräg nach innen bewegt werden, wodurch die ausgebildeten Hinterschneidungen freigegeben werden.

Der Auswerferrahmen 4 weist einen ersten Mitnehmer 10 und einen in Auswerfrichtung weiter vorne angeordneten zweiten Mitnehmer 12 auf. Der Mitnehmer 10 ist senkrecht zur Auswerfrichtung in dem Auswerferrahmen 4 beweglich gelagert und über eine Feder 14 zur Innenseite gegen einen nicht gezeigten Anschlag vorgespannt. Der zweite Mitnehmer 12 ist dagegen als fester nach innen vorstehender Vorsprung ausgebildet.

Zur mechanischen Kopplung mit dem Auswerferrahmen 4 weist der Schieber 6 einen nach außen bzw. senkrecht zur Auswerfrichtung hervorragenden Vorsprung oder eine Nase 16 auf, welche in der Spritzstellung (Position 1) zwischen den beiden Mitnehmern 10 und 12 in Auswerfrichtung gefangen ist. Der Schieber 6 wird somit über den Auswerferrahmen 4 in der Spritzstellung in einer gewünschten Position gehalten. Das Spiel zwischen den beiden Mitnehmern 10 und 12 und der darin aufgenommenen Nase 16 ist möglichst gering zu halten, da über die Position des Schiebers 6 die Formgebung an der Innenseite des Spritzgussteils definiert wird.

Ist der Einspritzvorgang beendet und wird die bewegliche Formhälfte geöffnet, wird gleichzeitig oder unmittelbar danach mit der Entformung des Spritzgussteils begonnen, indem der Auswerferrahmen 4 entgegen der Öffnungsrichtung der beweglichen Formhälfte in Auswerfrichtung bewegt wird. Der erste Mitnehmer 10 und der Vorsprung 16 des Schiebers 6 bilden eine erste Mitnehmerpaarung, über welche der Auswerferrahmen 4 bei seiner Bewegung in Auswerfrichtung den Schieber 6 ebenfalls in Auswerfrichtung schiebt oder bewegt. Da der Schieber 6 um einen Schrägwinkel α zur Auswerfrichtung am Kern 8 geführt ist, bewegt sich dieser auch in seitliche Richtung und dabei aus der zwischen den beiden Mitnehmern 10 und 12 gebildeten Nut heraus, bis schließlich der Mitnehmer 10 keine axiale Kraft mehr auf den Vorsprung 16 aufbringen kann und der Formschluss bzw. die mechanische Kopplung zwischen Auswerferrahmen 4 und Schieber 6 aufgehoben ist (Position 2). Der Schieber 6 ist somit frei beweglich bzw. nicht mehr mit dem Auswerferrahmen 4 zwangsgekoppelt.

Die Mitnehmerpaarung zwischen Mitnehmer 10 und Vorsprung 16 wird so aufeinander abgestimmt, dass an der Position 2, bis zu welcher der Auswerferrahmen 4 und der Schieber 6 miteinander gekoppelt sind, der Schieber 6 so weit nach innen bewegt wurde, dass der Schieber 6 die Hinterschneidungen freigibt. Ferner kann für den Schieber 6 in Auswerfrichtung ein Anschlag vorgesehen sein, um zu verhindern, dass sich der Schieber 6 aufgrund seiner Trägheit zu weit weiterbewegt.

Der Auswerferrahmen 4 dagegen bewegt sich weiter in Auswerfrichtung bis zu einer bestimmten Endstellung (Position 3), an der das Spritzgussteil vom Kern 8 fällt oder anderweitig entnommen wird.

Nach dem Entformen des Spritzgussteils müssen der Entformungsmechanismus 2, genauer gesagt der Auswerferrahmen 4 und der Schieber 6 wieder in ihre Ausgangsposition, d.h. in die Spritzstellung gebracht werden. Hierfür wird der Auswerferrahmen 4 von der Position 4 wieder zurückbewegt, wobei der Auswerferrahmen 4 bei dieser Bewegung wieder eine mechanische Kopplung mit dem Schieber 6 eingehen muss, um diesen mit in die Spritzstellung (Position 6) zurückzubewegen.

Um den Vorsprung 16 zwischen den beiden Mitnehmern 10 und 12 einzufangen, muss sichergestellt werden, dass bei der Rückwärtsbewegung des Auswerferrahmens 6 der Mitnehmer 10 den Vorsprung 16 passieren kann und keinen Formschluss mit diesem eingeht. Um dies sicherzustellen, ist der Mitnehmer 10, wie oben bereits beschrieben, federnd gelagert, so dass dieser quer zur Rückfahrrichtung bzw. nach außen ausweichen kann, falls dieser auf den Vorsprung 16 trifft (Position 5). Da der erste Mitnehmer 10 so ausgebildet ist, dass er ausweichen kann, wird unabhängig von der axialen Position des Schiebers sichergestellt, dass der Schieber 6 nicht über den Mitnehmer 10, sondern erst durch den darauffolgenden zweiten Mitnehmer 12 in die Position 6 gebracht wird. Um das Ausweichen des Mitnehmers 10 in Querrichtung zu fördern, ist der Mitnehmer 10 auf der in Rückfahrrichtung zugewandten Seite angeschrägt und der Vorsprung 16 auf seiner der Auswerfrichtung zugewandten Seite angeschrägt, wodurch der Vorsprung 16 aufgrund der Keilflächenpaarung in Querrichtung verdrängt wird. Diese Verdrängung erfolgt verschleißfrei, weil der ausweichende Mitnehmer 10 keinen Wesentlichen Widerstand liefert.

Da der zweite Mitnehmer 12 starr ausgebildet ist, geht dieser nach dem Passieren oder Ausweichen des ersten Mitnehmers 10 einen Formschluss mit dem Vorsprung 16 des Schiebers 6 ein und schiebt den Schieber 6 wieder in die Ausgangsposition bzw. Spritzstellung. Der Mitnehmer 10 wird nach dem Passieren des Vorsprungs 16 durch die Federvorspannung der Feder 14 wieder nach innen gedrückt, so dass der Vorsprung 16 zwischen den beiden Mitnehmern 10 und 12 in axialer Richtung gefangen ist und somit die Position des Schiebers 6 durch die Position des Auswerferrahmens 4 eindeutig definiert wird. Befindet sich der Entformungsmechanismus 2, d.h. der Auswerferrahmen 4 und der Schieber 6 in der Position 6 bzw. in der Spritzstellung, können die Formhälften wieder geschlossen werden und mit dem nächsten Einspritzvorgang begonnen werden.

Mit der vorliegenden Erfindung wird ein nahezu verschleißfreier Bewegungsablauf sichergestellt, der bei kurzen Zykluszeiten und hohen Stückzahlen gefahren werden kann.

Durch die federnde Lagerung des ersten Mitnehmers 10 kann dieser beim Einfahren des Auswerferrahmens dem Vorsprung 16 am Schieber im ausweichen, ohne dabei beschädigt zu werden. Dies ermöglicht mehr Spiel in der Zusammenführung der Verzahnung, und vermeidet eine Abrieb und Quetschung der ersten Mitnehmerverzahnung. Der Wartungsaufwand wird dadurch deutlich reduziert, und somit die Verfügbarkeit des Werkzeugs erhöht.

Ferner lassen sich dadurch kürzere Zykluszeiten erzielen, da durch diese Anordnung die Schieber und das Öffnen/Schließen der Werkzeuge parallel gefahren werden können.

Ein weiterer Vorteil ist die Vermeidung von Werkzeugschäden, welche durch Schließen bei ausgefahrenen Schiebern entstehen.

Die Erfindung wurde anhand eines vorteilhaften Ausführungsbeispiels beschrieben, ist jedoch auf dieses nicht beschränkt. Es sind diverse Abwandlungen und Modifikationen denkbar.

Beispielsweise kann der Auswerferrahmen alternativ oder zusätzlich auch auf seiner Außenseite entsprechende Mitnehmer aufweisen, die auf die gleiche Weise mit außenliegenden Schiebern gekoppelt werden.

Über den Auswerferrahmen kann nicht nur ein Schieber, sondern auch mehrere Schieber(pakete) betätigt und mit diesem nach dem erfindungsgemäßen Prinzip mechanisch gekoppelt werden.

Ferner sind anstelle des in Querrichtung bewegbaren und federvorgespannten Mitnehmers auch andere Schnapp- oder Sperrmechanismen denkbar, welche nur in Auswerfrichtung einen Formschluss herstellen. Beispielsweise kann der erste Mitnehmer (nur) in Auswerfrichtung schwenk- oder klappbar am Auswerferrahmen angelenkt sein, um dem Eingriffsabschnitt am Schieber in der Rückfahrbewegung ausweisen zu können.

## Patentansprüche

1. Entformungsmechanismus (2) zum Entformen eines Spritzgussteils mit Hinterschneidungen aus einem Spritzgusswerkzeug, mit einem Auswerferrahmen (4) zum Auswerfen des Spritzgussteils von einer Werkzeugformhälfte (8) in eine Auswerfrichtung und zumindest einem schräg zur Auswerfrichtung beweglichen und geführten Schieber (6) zum Freigeben der Hinterschneidungen im Spritzgussteil, wobei der Auswerferrahmen (4) und der Schieber (6) eine erste Mitnehmerpaarung (10, 16) aufweisen, über welche der Auswerferrahmen (4) den Schieber (6) von der Einspritzposition soweit schräg zur Auswerfrichtung bewegen kann, bis die erste Mitnehmerpaarung (10, 16) aufgrund des zunehmenden Abstands zwischen Auswerferrahmen (4) und Schieber (6) außer Eingriff kommt,
**dadurch gekennzeichnet, dass**
die erste Mitnehmerpaarung (10, 16) derart ausgebildet ist, dass sie bei einer Bewegung des Auswerferrahmens (4) in die Auswerfrichtung einen Formschluss zwischen Auswerferrahmen (4) und Schieber (6) bewirkt und bei einer Bewegung des Auswerfers (4) in die entgegengesetzte Rückfahrrichtung keinen Formschluss zwischen Auswerfer (4) und Schieber (6) bewirkt.

2. Entformungsmechanismus (2) nach Anspruch 1, **dadurch gekennzeichnet, dass** der Auswerferrahmen (4) und der Schieber (6) eine zweite Mitnehmernehmerpaarung (12, 16) aufweisen, über welche der Auswerferrahmen (4) den Schieber (6) in Rückfahrrichtung wieder in die Einspritzposition bewegen kann.

3. Entformungsmechanismus nach Anspruch 2, **dadurch gekennzeichnet, dass**
die erste Mitnehmerpaarung (10, 16) einen am Auswerferrahmen (4) angeordneten ersten Mitnehmer (10), insbesondere einen ersten Mitnehmersteg, und einen am Schieber (6) ausgebildeten Eingriffsabschnitt (16), insbesondere einen Vorsprung oder Absatz, aufweist,
die zweite Mitnehmerpaarung (12, 16) durch einen am Auswerferrahmen(4) in Auswerfrichtung weiter vorne angeordneten zweiten Mitnehmer (12), insbesondere einen zweiten, mindestens gleich hohen Mitnehmersteg, und den am Schieber (6) ausgebildeten Eingriffsabschnitt (16) gebildet wird, wobei
der erste Mitnehmer (10) und der Eingriffsabschnitt (12) so ausgebildet sind, dass sie in Auswerfrichtung formschlüssig ineinandergreifen und in Rückfahrrichtung einander ausweichen können.

4. Entformungsmechanismus nach Anspruch 3, **dadurch gekennzeichnet, dass** der am Schieber (6) ausgebildete Eingriffsabschnitt (16) in der Einspritzposition zwischen dem ersten und zweiten Mitnehmer (10, 12) formschlüssig aufgenommen oder gefangen ist.

5. Entformungsmechanismus nach Anspruch 3 oder 4, **dadurch gekennzeichnet, dass** der erste Mitnehmer (10) so ausgebildet ist, dass er bei einer in Auswerfrichtung oder in Querrichtung einwirkenden Kraftkomponente zurück- oder ausweicht.

6. Entformungsmechanismus nach einem der Ansprüche 3 bis 5, **dadurch gekennzeichnet, dass** der erste Mitnehmer (10) in Form einer Sperrklinke ausgebildet ist, wobei der erste Mitnehmer (10) und der am Schieber (6) angeordneten Vorsprung (16) in Auswerfrichtung formschlüssig ineinandergreifen und in Rückfahrrichtung der erste Mitnehmer (10) durch den Vorsprung (16) verdrängt wird.

7. Entformungsmechanismus nach einem der Ansprüche 3 bis 6, **dadurch gekennzeichnet, dass** der erste Mitnehmer (10) auf der der Rückfahrrichtung zugewandten Seite und/oder der Vorsprung (16) auf der der Auswerfrichtung zugewandten Seite abgeschrägt oder abgerundet ist und der erste Mitnehmer (10) quer zur Rückfahrrichtung bewegbar sind.

8. Entformungsmechanismus nach einem der Ansprüche 3 bis 6, **dadurch gekennzeichnet, dass** der erste Mitnehmer (10) am Auswerfer (4) schwenkbar gelagert ist, wobei er von einer Position, in der er sich im Wesentlichen quer zur Auswerfrichtung erstreckt, nur in Auswerfrichtung schwenkbar oder klappbar ist.

9. Entformungsmechanismus nach einem der Ansprüche 1 bis 8, **dadurch gekennzeichnet, dass** der erste Mitnehmer federelastisch vorgespannt ist.

10. Entformungsmechanismus nach einem der Ansprüche 1 bis 9, **dadurch gekennzeichnet, dass** der Auswerfer (4) ein Auswerferrahmen zum Abstreifen des Spritzgussteils vom Werkzeugkern (8) ist und der zumindest eine Schieber (6) ein innen liegender und schräg zur Auswerfrichtung nach innen beweglicher Schieber oder Schieberpaket zum Freigeben von inneren Hinterschneidungen im Spritzgussteil ist.

11. Spritzgießwerkzeug mit einer festen und einer beweglichen Formhälfte, wobei der Werkzeugkern auf der beweglichen Formhälfte angeordnet ist, **gekennzeichnet durch** einen Entformungsmechanismus nach einem der vorhergehenden Ansprüche, wobei beim Öffnen und/oder Schließen der beweglichen Formhälfte der Auswerferrahmen und damit der Schieber zur gleichen Zeit relativ in die jeweils entgegengesetzte Richtung bewegt werden.

## Claims

1. Demoulding mechanism (2) for demoulding an injection-moulded part having undercuts from an injection mould, having an ejector frame (4) for ejecting the injection-moulded part from a mould half (8) in an ejection direction and at least one slide (6) movable and guided obliquely to the ejection direction for releasing the undercuts in the injection-moulded part, wherein the ejector frame (4) and the slide (6) comprise a first driver pairing (10, 16), by means of which the ejector frame (4) can move the slide (6) from the injection position obliquely to the ejection direction sufficiently far so that the first driver pairing (10, 16) disengages because of the increasing distance between ejector (4) and slide (6),
**characterised in that**
the first driver pairing (10, 16) is designed in such a way that an interlocking connection is formed between ejector frame (4) and slide (6) when the ejector frame (4) is moved in the ejection direction and an interlocking connection is not formed between ejector (4) and slide (6) when the ejector (4) is moved in the opposing, return direction.

2. Demoulding mechanism (2) according to claim 1, **characterised in that** the ejector frame (4) and the slide (6) comprise a second driver pairing (12, 16) via which the ejector frame (4) can move the slide (6) in the return direction back into the injection position.

3. Demoulding mechanism according to claim 2, **characterised in that**
the first driver pairing (10, 16) comprises a first driver (10), in particular a first driver bar, which is arranged at the ejector frame (4) and an engagement portion (16), in particular a projection or recess, which is formed at the slide (6),
the second driver pairing (12, 16) is formed by a second driver (12), in particular a second driver bar which is at least equally high, arranged at the ejector frame (4) further ahead in the ejection direction and the engagement portion (16) formed at the slide (6), wherein
the first driver (10) and the engagement portion (12) are formed in such a way that they form an interlocking connection in the ejection direction and that they can avoid each other in the return direction.

4. Demoulding mechanism according to claim 3, **characterised in that** the engagement portion (16) formed at the slide (6) is received or caught in an interlocking connection between the first and second driver (10, 12) in the injection position.

5. Demoulding mechanism according to claim 3 or 4, **characterised in that** the first driver (10) is formed in such a way that it moves backwards or away when a force component acts in the ejection direction or in the transverse direction.

6. Demoulding mechanism according to one of claims 3 to 5, **characterised in that** the first driver (10) is formed as a stop pawl, wherein the first driver (10) and the projection (16) arranged at the slide (6) in the ejection direction have an interlocking connection and the first driver (10) is pushed aside by the projection (16) in the return direction.

7. Demoulding mechanism according to one of claims 3 to 6, **characterised in that** the first driver (10) is slanted or rounded on the side facing the return direction and/or the projection (16) on the side facing the ejection direction, and the first driver (10) is movable transversely to the return direction.

8. Demoulding mechanism according to one of claims 3 to 6, **characterised in that** the first driver (10) is pivotably mounted on the ejector (4), wherein, from a position in which it extends essentially transversely in the ejection direction, it is only pivotable or foldable in the ejection direction.

9. Demoulding mechanism according to one of claims 1 to 8, **characterised in that** the first driver is resiliently prestressed.

10. Demoulding mechanism according to one of claims 1 to 9, **characterised in that** the ejector (4) is an ejector frame for stripping off the injection-moulded part from the mould core (8) and the at least one slide (6) is a slide or slide packet lying inside and being slantedly movable inwards with respect to the ejection direction for releasing inner undercuts in the injection-moulded part.

11. Injection mould having a fixed and a movable mould half, wherein the mould core is arranged on the movable mould half, **characterised by** a demoulding mechanism according to one of the preceding claims, wherein when opening and/or closing the movable mould half, the ejector frame and thus the slide are moved relatively in the respective opposite directions at the same.

## Revendications

1. Mécanisme de démoulage (2) servant à démouler d'un outil de moulage par injection une pièce moulée par injection pourvue de contre-dépouilles, comprenant un cadre éjecteur (4) servant à éjecter la pièce moulée par injection d'une moitié de moule (8) dans un sens d'éjection et comprenant au moins un coulisseau (6) pouvant être déplacé et guidé de manière oblique par rapport au sens d'éjection, servant à dégager les contre-dépouilles dans la pièce moulée par injection, sachant que le cadre éjecteur (4) et le coulisseau (6) présentent une première paire d'éléments d'entraînement (10, 16), par l'intermédiaire de laquelle le cadre éjecteur (4) peut déplacer le coulisseau (6) de la position d'injection de manière oblique par rapport au sens d'éjection jusqu'à ce que la première paire d'éléments d'entraînement (10, 16) soit hors prise du fait de l'espacement augmentant entre le cadre éjecteur (4) et le coulisseau (6),
**caractérisé en ce que**
la première paire d'éléments d'entraînement (10, 16) est réalisée de telle manière qu'elle entraîne une complémentarité de forme entre le cadre éjecteur (4) et le coulisseau (6) lors d'un déplacement du cadre éjecteur (4) dans le sens d'éjection et qu'elle n'entraîne aucune complémentarité de forme entre l'éjecteur (4) et le coulisseau (6) lors d'un déplacement de l'éjecteur (4) dans le sens de retour opposé.

2. Mécanisme de démoulage (2) selon la revendication 1, **caractérisé en ce que** le cadre éjecteur (4) et le coulisseau (6) présentent une deuxième paire d'éléments d'entraînement (12, 16), par l'intermédiaire de laquelle le cadre éjecteur (4) peut déplacer le coulisseau (6) dans le sens de retour à nouveau dans la position d'injection.

3. Mécanisme de démoulage selon la revendication 2, **caractérisé en ce que**
la première paire d'éléments d'entraînement (10, 16) présente un premier élément d'entraînement (10) disposé au niveau du cadre éjecteur (4), en particulier une barrette d'entraînement, et une section de prise (16) réalisée au niveau du coulisseau (6), en particulier une partie faisant saillie ou un retrait,
la deuxième paire d'éléments d'entraînement (12, 16) est formée par un deuxième élément d'entraînement (12) disposé davantage à l'avant au niveau du cadre éjecteur (4) dans le sens d'éjection, en particulier par une deuxième barrette d'entraînement présentant au moins une hauteur identique, et par la section de prise (16) réalisée au niveau du coulisseau (6), sachant que
le premier élément d'entraînement (10) et la section de prise (12) sont réalisés de telle manière qu'ils peuvent s'imbriquer par complémentarité de forme dans le sens d'éjection et peuvent s'écarter l'un de l'autre dans le sens du retour.

4. Mécanisme de démoulage selon la revendication 3, **caractérisé en ce que** la section de prise (16) réalisée au niveau du coulisseau (6) est logée ou coincée par complémentarité de forme dans la position d'injection entre le premier et le deuxième élément d'entraînement (10, 12).

5. Mécanisme de démoulage selon la revendication 3 ou 4, **caractérisé en ce que** le premier élément d'entraînement (10) est réalisé de telle manière qu'il recule ou dévie en présence d'une composante de force agissant dans le sens d'éjection ou dans le sens transversal.

6. Mécanisme de démoulage selon l'une quelconque des revendications 3 à 5, **caractérisé en ce que** le premier élément d'entraînement (10) est réalisé sous la forme d'un loquet de blocage, sachant que le premier élément d'entraînement (10) et la partie faisant saillie (16) disposée au niveau du coulisseau (6) s'imbriquent par complémentarité de forme dans le sens d'éjection et que le premier élément d'entraînement (10) est repoussé par la partie faisant saillie (16) dans le sens du retour.

7. Mécanisme de déformation selon l'une quelconque des revendications 3 à 6, **caractérisé en ce que** le premier élément d'entraînement (10) est biseauté ou arrondi sur le côté tourné vers le sens du retour, et/ou la partie faisant saillie (16) est biseautée ou arrondie sur le côté tourné vers le sens d'éjection, et le premier élément d'entraînement (10) peut être déplacé de manière transversale par rapport au sens du retour.

8. Mécanisme de déformation selon l'une quelconque des revendications 3 à 6, **caractérisé en ce que** le premier élément d'entraînement (10) est monté de manière à pouvoir pivoter au niveau de l'éjecteur (4), sachant qu'il peut pivoter ou basculer uniquement dans le sens d'éjection depuis une position, dans laquelle il s'étend essentiellement de manière transversale par rapport au sens d'éjection.

9. Mécanisme de déformation selon l'une quelconque des revendications 1 à 8, **caractérisé en ce que** le premier élément d'entraînement est précontraint avec la flexibilité d'un ressort.

10. Mécanisme de déformation selon l'une quelconque des revendications 1 à 9, **caractérisé en ce que** l'éjecteur (4) est un cadre éjecteur servant à peler la pièce moulée par injection de la partie centrale de l'outil (8), et **en ce que** le coulisseau (6) au moins au nombre de un est un coulisseau ou un empilement de coulisseaux situé à l'intérieur et pouvant être déplacé vers l'intérieur de manière oblique en direction du sens d'éjection, servant à dégager des contre-dépouilles intérieures dans la pièce moulée par injection.

11. Outil de moulage par injection comprenant une moitié de moule fixe et une moitié de moule mobile, sachant que la partie centrale d'outil est disposée sur la moitié de moule mobile, **caractérisé par** un mécanisme de démoulage selon l'une quelconque des revendications précédentes, sachant que le cadre éjecteur et, ce faisant, le coulisseau sont déplacés dans le même temps relativement dans le sens respectivement opposé lors de l'ouverture et/ou lors de la fermeture de la moitié de moule mobile.
